# EUROPÄISCHE PATENTANMELDUNG

(11) **EP 3 428 032 A1**
(43) Veröffentlichungstag der Anmeldung: **16.01.2019**
(21) Anmeldenummer: 18183053.0
(22) Anmeldetag: 12.07.2018
(51) Int. Cl.: B60W 50/08, B62D 15/02, B60W 30/06, G06K 9/00

(54) **AUTONOMES PARKEN EINES FAHRZEUGS BASIEREND AUF EINEM BEFAHRBAREN BEREICH**

(30) Priorität: 13.07.2017 DE 102017115810
(71) Anmelder: Valeo Schalter und Sensoren GmbH, 74321 Bietigheim-Bissingen (DE)
(72) Erfinder: Fuchs, Fabian, 74321 Bietigheim-Bissingen (DE)

(57) **Zusammenfassung**

Die Erfindung betrifft ein Verfahren zum autonomen Parken eines Fahrzeugs (10) basierend auf einer Trajektorie (10), umfassend die Schritte Bereitstellen der Trajektorie (30) von einem Startpunkt (32) zu einem Zielpunkt (34), Darstellen der Trajektorie (30) in einem User Interface (26), Darstellen eines Umgebungsbereichs (38) der Trajektorie (30) in dem User Interface (26), Bestimmen eines befahrbaren Bereichs (44) in dem Umgebungsbereich (38), und automatisches Anpassen der Trajektorie (30) von dem Startpunkt (32) zu dem Zielpunkt (34) unter Berücksichtigung des befahrbaren Bereichs (44). Die Erfindung betrifft außerdem ein Fahrassistenzsystem (12) zur Durchführung des obigen Verfahrens. Die Erfindung betrifft weiterhin ein Fahrzeug (10) mit einem obigen Fahrassistenzsystem (12).

## Beschreibung

Die vorliegende Erfindung betrifft ein Verfahren zum autonomen Parken eines Fahrzeugs basierend auf einer Trajektorie.

Auch betrifft die vorliegende Erfindung ein Fahrassistenzsystem zur Durchführung des obigen Verfahrens.

Des Weiteren betrifft die vorliegende Erfindung ein Fahrzeug mit einem oben genannten Fahrassistenzsystem.

Autonome Fahrassistenzsystems sind bereits seit langem bekannt. In Teilbereichen wie beispielsweise dem Parken werden derartige Systeme bereits seit einiger Zeit verwendet. Solche autonomen Fahrassistenzsysteme können ein Fahrzeug beispielsweise einparken, indem das Fahrzeug selbsttätig von seinem Standort in eine Parklücke oder auf einen gewünschten Parkplatz bewegt wird. Entsprechendes gilt für ein Ausparken des Fahrzeugs, wobei eine umgekehrte Bewegung von der Parklücke oder dem Parkplatz auf eine Position zur Teilnahme am Verkehr erfolgt.

Derartige Fahrassistenzsysteme reichen von einem relativ einfachen System, welches ein Fahrzeug von der Straße in einen unmittelbar angrenzenden Parkplatz manövriert, bis hin zu Systemen, die ein Fahrzeug selbsttätig aus einer Haltposition, beispielsweise an einem Hauseingang, bis hin zu einem entfernten Stellplatz oder einer Garage als Zielposition bewegen. Letzteres erfolgt meist auf einem privaten Grundstück.

Essentiell ist für das autonome Einparken, dass das Fahrassistenzsystem eine Trajektorie kennt, entlang welcher das Fahrzeug zum Erreichen der Zielposition bewegt werden kann. Dabei gibt es prinzipiell zwei Ansätze. Zum einen kann die Trajektorie von dem Fahrzeug selbstständig bestimmt werden. Dies funktioniert innerhalb vorgegebener Rahmenbedingungen wie beispielsweise eines befahrbaren Bereichs bereits zuverlässig. Der befahrbare Bereich wird entweder durch Sensoren erkannt oder aus Kartendaten generiert. Probleme können auftreten, wenn der befahrbare Bereich nicht akkurat ermittelt wird. Dies kann passieren, wenn die Sensoren den befahrbaren Bereich nicht oder falsch erkennen und/oder Kartendaten nicht verfügbar sind.

Insbesondere beim Einparken auf einem privaten Grundstück kann dies problematisch sein, da für private Grundstücke üblicherweise keine Karteninformationen verfügbar sind oder beispielsweise aus datenschutzrechtlichen oder anderen Gründen nicht zur Verfügung gestellt werden können. Bei auftretenden Problemen entlang der Trajektorie, beispielsweise einem neuen Hindernis, ist ein Ausweichen und Berechnen einer neuen Trajektorie schwierig und abhängig davon, dass das Fahrzeug Sensoren aufweist, mit denen eine Umgebung erfasst werden kann, um die neue Trajektorie bestimmen zu können.

Zum anderen kann die Trajektorie gelernt werden, indem das Fahrzeug von dem Fahrer von einem Startpunkt zu einem Zielpunkt manövriert wird, und das Fahrzeug die gefahrene Trajektorie bzw. Fahrmanöver zum Fahren der Trajektorie aufzeichnet und im Anschluss reproduziert, um das Fahrzeug erneut von dem Startpunkt zu dem Zielpunkt zu bewegen. Auch hierbei kann ein Auftreten von neuen Hindernissen im Bereich der Trajektorie problematisch sein und ein Eingreifen des Fahrers erfordern. Dies reduziert den Komfort beim selbstständigen Einparken und ist daher nicht akzeptabel.

In diesem Zusammenhang ist aus der DE 10 2013 213 225 A1 ein Verfahren zur Steuerung eines Parkassistenzsystems für ein Fahrzeug bekannt, insbesondere für ein Kraftfahrzeug. Vom Parkassistenzsystem wird ein gespeichertes Park- oder Rangiermanöver entlang einer Trajektorie bereitgestellt, insbesondere eine gespeicherte Trajektorie abgerufen wird, und über eine Anzeigevorrichtung werden dem Fahrer die Trajektorie aus einer Startposition bis zu einer Zielposition des Fahrzeuges und Umgebungsobjekte dargestellt. Wenigstens ein nicht mit der Trajektorie abgespeichertes Hindernis, das zwischen der Startposition und der Zielposition vor dem Fahrzeug liegt, wird dem Fahrer angezeigt, wobei der Fahrer durch eine Eingabe über ein HMI-Element dem Parkassistenzsystem anweist, wie das Hindernis vom Fahrzeug zu umfahren ist.

Auch ist aus der DE 10 2014 014 219 A1 ein Verfahren zum Betrieb eines Fahrerassistenzsystems zur Durchführung eines Parkvorgangs eines Fahrzeugs bekannt. Während einer Lernfahrt wird eine Fahrzeugumgebung erfasst und gespeichert. Anhand der erfassten Fahrzeugumgebung wird mindestens eine Trajektorie zu einer Zielposition ermittelt und gespeichert. Dabei ist vorgesehen, dass während der Lernfahrt Hindernisse auf der ermittelten Trajektorie erfasst und gespeichert werden und in für das Fahrzeug passierbare und unpassierbare Hindernisse klassifiziert werden, wobei die ermittelte Trajektorie an die klassifizierten Hindernisse derart angepasst wird, dass unpassierbare Hindernisse bei dem Parkvorgang umfahren werden.

Weiter ist aus der DE 10 2014 018 192 A1 ein Verfahren zum Steuern eines Fahrzeugs, bei welchem aus Fahrdaten des Fahrzeuges eine Solltrajektorie bestimmt wird, welche dem Fahrzeug bei automatischen Fahrt zugrunde gelegt wird. Bei einem Verfahren wird bei einer geänderten Umgebung der Fahrt eine, aus aktuellen Fahrdaten des Fahrzeuges ermittelte Trajektorie mit der Solltrajektorie verglichen. Abweichungen zwischen der neuen Trajektorie und der Solltrajektorie werden ermittelt und in Abhängigkeit von den Abweichungen eine neue Solltrajektorie eingestellt.

Ausgehend von dem oben genannten Stand der Technik liegt der Erfindung somit die Aufgabe zugrunde, ein Verfahren zum autonomen Parken eines Fahrzeugs basierend auf einer Trajektorie, ein Fahrassistenzsystem zur Durchführung dieses Verfahrens, und ein Fahrzeug mit einem solchen Fahrassistenzsystem anzugeben, die ein einfaches und zuverlässiges Parken eines Fahrzeugs unter Benutzung einer Trajektorie ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zum autonomen Parken eines Fahrzeugs basierend auf einer Trajektorie angegeben, umfassend die Schritte Bereitstellen der Trajektorie von einem Startpunkt zu einem Zielpunkt, Darstellen der Trajektorie in einem User Interface, Darstellen eines Umgebungsbereichs der Trajektorie in dem User Interface, und Bestimmen eines befahrbaren Bereichs in dem Umgebungsbereich.

Erfindungsgemäß ist außerdem ein Fahrassistenzsystem zur Durchführung des obigen Verfahrens angegeben.

Weiter ist erfindungsgemäß ein Fahrzeug mit einem oben genannten Fahrassistenzsystem angegeben.

Grundidee der vorliegenden Erfindung ist es also, über das User Interface eine Klassifizierung von einem Umgebungsbereich einer Trajektorie in wenigstens einen befahrbaren und wenigstens einen nicht befahrbaren Bereich durchzuführen. Dazu wird in dem User Interface eine entsprechende Eingabe getätigt, um befahrbare Bereiche zu definieren. Dadurch kann beim Parken beispielsweise ein Überfahren eines Blumenbeets oder Rasens vermieden werden. Bei dem Verfahren reicht es prinzipiell aus, wenn der befahrbare Bereich einmalig bestimmt wird. Im Anschluss kann auf diese Information wiederholt zugegriffen werden, d.h. der Schritt des Bestimmens des befahrbaren Bereichs kann für jede Trajektorie lediglich einmal durchgeführt werden, um das Fahrzeug wiederholt zuverlässig Parken zu können. Bei auftretenden Problemen entlang der Trajektorie, beispielsweise einem neuen Hindernis, können im fahrbaren Bereich ein Ausweichen und ein Berechnen einer neuen Trajektorie erfolgen, ohne das Verfahren komplett neu starten zu müssen.

Das vorgeschlagene Verfahren ist effizient durchzuführen und erfordert nur eine geringe Interaktion eines Fahrers, um den befahrbaren Bereich zu bestimmen. Im Anschluss kann das Verfahren durchgeführt werden, d.h. das Fahrzeug kann eingeparkt oder ausgeparkt werden, ohne dass eine erneute Interaktion des Fahrers erforderlich wird. Durch die Bestimmung des befahrbaren Bereichs kann das Fahrassistenzsystem auch bei geändertem Startpunkt oder einer geänderten Ausrichtung des Fahrzeugs an dem Startpunkt sowie bei auftretenden neuen Hindernissen die Trajektorie anpassen, um den Zielpunkt zu erreichen. Außerdem kann das Verfahren mit einer hohen Zuverlässigkeit durchgeführt werden.

Das autonome Parken eines Fahrzeugs betrifft das Einparken wie auch das Ausparken des Fahrzeugs, wobei das Fahrzeug durch das Fahrassistenzsystem selbsttätig von seinem Standort in eine Parklücke oder auf einen gewünschten Parkplatz bewegt wird. Entsprechendes gilt für das Ausparken des Fahrzeugs, wobei eine umgekehrte Bewegung von der Parklücke oder dem Parkplatz auf eine Position zur Teilnahme am Verkehr erfolgt. Beide Bewegungen können basierend auf derselben Trajektorie erfolgen.

Die Fahrassistenzsysteme reichen von einem System, welches ein Fahrzeug von der Straße in einen unmittelbar angrenzenden Parkplatz manövriert, bis hin zu Systemen, die ein Fahrzeug selbsttätig aus einer Haltposition, beispielsweise an einem Hauseingang, bis hin zu einem entfernten Stellplatz oder einer Garage als Zielposition bewegen.

Das Fahrzeug kann ein beliebiges Fahrzeug mit zwei, drei, vier, oder mehr Rädern sein, das einen beliebigen Antrieb aufweist, entweder mit Verbrennungsmotor, elektrischem Motor, oder einer Kombination davon. Das Fahrzeug ist zur autonomen Steuerung mit dem Fahrassistenzsystem ausgeführt. Als solches umfasst das Fahrzeug beispielsweise Abstandssensoren, z.B. Ultraschallsensoren, oder andere Umgebungssensoren, um ein entsprechendes autonomes Fahren durchführen zu können.

Die Trajektorie kann durch Berechnung angegeben sein. Alternativ kann die Trajektorie gelernt werden, indem das Fahrzeug von dem Fahrer von dem Startpunkt zu dem Zielpunkt manövriert wird, und das Fahrzeug die gefahrene Trajektorie bzw. Fahrmanöver zum Fahren der Trajektorie aufzeichnet und im Anschluss reproduziert, um das Fahrzeug erneut von dem Startpunkt zu dem Zielpunkt zu bewegen.

Der Startpunkt ist ein Ausgangspunkt eines Parkvorgangs. Der Startpunkt kann abhängig von der Art des Parkvorgangs ein Haltepunkt vor dem Einparken, oder der Parkplatz vor dem Ausparken sein. Entsprechendes gilt für den Zielpunkt.

Der Umgebungsbereich ist üblicherweise ein Bereich um das Fahrzeug und die Trajektorie herum, in dem eine alternative Trajektorie bestimmt werden kann. Der Bereich ist vorzugsweise groß genug, um über die Bestimmung des befahrbaren Bereichs die Trajektorie zuverlässig bestimmen zu können. Andererseits erleichtert eine detailreiche Darstellung eine Zuordnung der Details zu der befahrbaren Fläche.

Das Bestimmen des befahrbaren Bereichs in dem Umgebungsbereich erfolgt vorzugsweise ebenfalls über das User Interface. Vorzugsweise werden dabei Eingaben in dem User Interface getätigt, die den befahrbaren Bereich definieren.

In vorteilhafter Ausgestaltung der Erfindung umfasst das Verfahren einen zusätzlichen Schritt eines automatischen Anpassens der Trajektorie von dem Startpunkt zu dem Zielpunkt unter Berücksichtigung des befahrbaren Bereichs. Bei auftretenden Problemen entlang der Trajektorie, beispielsweise einem neuen Hindernis, kann die Anpassung der Trajektorie im fahrbaren Bereich erfolgen, so dass das Fahrzeug entsprechend ausweichen kann, ohne das Verfahren komplett neu starten zu müssen.

Das automatische Anpassen der Trajektorie von dem Startpunkt zu dem Zielpunkt erfolgt, wenn sich beispielsweise ein neues Hindernis im Bereich der Trajektorie befindet. Unter Berücksichtigung des befahrbaren Bereichs können somit Hindernisse innerhalb des befahrbaren Bereichs einfach umfahren werden.

In vorteilhafter Ausgestaltung der Erfindung umfasst der Schritt des Bereitstellens der Trajektorie von einem Startpunkt zu einem Zielpunkt ein Lernen der Trajektorie basierend auf wenigstens einer vorherigen Trajektorie. Das Lernen der Trajektorie kann also besonders einfach erfolgen, indem die Trajektorie mit dem Fahrzeug beispielsweise in einem Lernmodus abgefahren wird. Dabei kann ein einmaliges Abfahren der Trajektorie bereits ausreichend sein. Die Trajektorie kann dabei auf verschiedene Weisen gelernt werden. So können beim Abfahren der Trajektorie kontinuierlich Positionsdaten aufgezeichnet werden, insbesondere Satellitenpositionsdaten, welche die Trajektorie definieren. Beispielsweise können die Positionsdaten relativ zu Lokalisierungsinformation von Umgebungssensoren sein, wie einer Laserscanner- oder einer Kamera-Lokalisierung. Alternativ oder zusätzlich können Fahrzeugbewegungen kontinuierlich aufgezeichnet werden, um so eine relative Bewegung des Fahrzeugs ausgehend von dem Startpunkt zu dem Zielpunkt nachbilden zu können. Die Fahrzeugbewegungen werden beispielsweise als Odometrieinformationen des Fahrzeugs erfasst.

In vorteilhafter Ausgestaltung der Erfindung umfasst der Schritt des Darstellens der Trajektorie in einem User Interface eine grafische Darstellung in einem grafischen User Interface. Die grafische Darstellung umfasst vorzugsweise eine Kartendarstellung. Das User Interface umfasst vorzugsweise einen Bildschirm, der weiter bevorzugt berührungsempfindlich ausgeführt ist. Somit kann der Bildschirm zur Ausgabe wie auch zur Eingabe von Informationen verwendet werden.

In vorteilhafter Ausgestaltung der Erfindung umfasst der Schritt des Darstellens eines Umgebungsbereichs der Trajektorie in dem User Interface ein Erfassen von Umgebungsinformationen in dem Umgebungsbereich mit wenigstens einem Umgebungssensor und ein Darstellen der von dem Umgebungssensor erfassten Umgebungsinformationen in dem Umgebungsbereich. Der Umgebungssensor ist vorzugsweise als Ultraschallsensor, Lidar, insbesondere Laserscanner, oder Kamera, insbesondere Stereokamera, ausgeführt. Auch kann der Umgebungssensor eine Mehrzahl entsprechender Einzelsensoren aufweisen, die gemeinsam die Umgebungsinformationen liefern. Die Umgebungsinformationen können unterschiedlich ausgeführt sein. Hierbei kann es sich beispielsweise um erkannte Hindernisse handeln, die üblicherweise visuell von dem Fahrer des Fahrzeugs erkannt werden können. Dadurch können die Hindernisse als Anhaltspunkte für Positionen des befahrbaren Bereichs dienen. Entsprechend können die Hindernisse beispielsweise in einer Umgebungskarte mit den Umgebungsinformationen eingezeichnet werden. Alternativ oder zusätzlich kann der Umgebungsbereich beispielsweise mit einem oder mehreren Sensorbildern dargestellt werden. Vorzugsweise umfasst der Umgebungssensor eine Kamera, und die Umgebungsinformationen umfassen ein Kamerabild. Das Kamerabild kann mit einer Umgebungskarte überlagert werden, oder umgekehrt.

In vorteilhafter Ausgestaltung der Erfindung umfasst der Schritt des Darstellens eines Umgebungsbereichs der Trajektorie in dem User Interface ein automatisches Unterteilen des von dem Umgebungssensor erfassten Umgebungsbereichs in ähnliche Bereiche und ein gemeinsames Darstellen der ähnlichen Bereiche. Die ähnlichen Bereiche können abhängig von der Art des Umgebungssensors und des Bereichs auf unterschiedliche Weise erkannt werden. Beispielsweise können ähnliche Bereiche eine einheitliche Höhe aufweisen, was beispielsweise mit eine Lidar erfasst werden kann. Auch können aus den Umgebungsinformationen Begrenzungskonturen abgeleitet werden, beispielsweise ein Bordstein. Bei Verwendung einer Kamera als Umgebungssensor kann eine einheitliche Farbe einen ähnlichen Bereich definieren, beispielsweise eine grüne Wiese.

In vorteilhafter Ausgestaltung der Erfindung umfasst der Schritt des automatischen Unterteilens des von dem Umgebungssensor erfassten Umgebungsbereichs in ähnliche Bereiche eine Verwendung einer Kamera als Umgebungssensor und eine Klassifizierung des Umgebungsbereichs in ähnliche Bereiche basierend auf von der Kamera aufgenommenen Bilddaten. Es sind verschiedene Algorithmen bekannt, um eine solche Klassifizierung durchzuführen. Auch wenn eine solche Klassifizierung von ähnlichen Bereichen basierend auf der Kamera komplex und rechenaufwendig, ist die Anwendung hier unproblematisch, da die Anwendung vorliegend quasi statisch sein kann, d.h. ohne dynamische Informationen. Außerdem ist die Klassifizierung ausgehend von der statischen Anwendung nicht zeitkritisch.

In vorteilhafter Ausgestaltung der Erfindung umfasst der Schritt des Bestimmens eines befahrbaren Bereichs in dem Umgebungsbereich ein Bestimmen und Darstellen eines durch die Trajektorie definierten befahrbaren Bereichs. Der durch die Trajektorie definierte befahrbare Bereich ergibt sich unmittelbar aus der Trajektorie und fahrzeugspezifischen Daten, beispielsweise einer Fahrzeugbreite und/oder einer Fahrzeuglänge. Da die Trajektorie bestimmt wurde, beispielsweise durch Lernen, wird davon ausgegangen, dass die so bestimmte Trajektorie von dem entsprechenden Fahrzeug befahrbar ist. Der so definierte befahrbare Bereich kann einerseits einen Ausgangspunkt darstellen für eine Definition des befahrbaren Bereichs, und andererseits als weitere Orientierungshilfe bei der der Definition des befahrbaren Bereichs dienen. Eine Erweiterung des befahrbaren Bereichs erfolgt vorzugsweise mit Hilfe von Sektoren. Die Sektoren können weiter bevorzugt über das User Interface ausgewählt werden.

In vorteilhafter Ausgestaltung der Erfindung umfasst der Schritt des Bestimmens eines befahrbaren Bereichs in dem Umgebungsbereich ein Erweitern des durch die Trajektorie definierten befahrbaren Bereichs. Dies ermöglicht ein effizientes Bestimmen des befahrbaren Bereichs, da bereits eine Initialisierung des befahrbaren Bereichs erfolgt. Eine Erweiterung des befahrbaren Bereichs erfolgt vorzugsweise mit Hilfe von Sektoren. Die Sektoren können weiter bevorzugt über das User Interface ausgewählt werden.

In einer alternativen Ausführungsform erfolgt eine Erweiterung des befahrbaren Bereichs durch Polygonanpassung, vorzugsweise über einen Touchscreen. Auf dem Touchscreen wird ein initiales Polygon durch einen initial befahrbaren Bereich vorgegeben, das entsprechend erweitert werden kann.

In vorteilhafter Ausgestaltung der Erfindung umfasst der Schritt des Bestimmens eines befahrbaren Bereichs in dem Umgebungsbereich ein Markieren wenigstens eines nicht befahrbaren Bereichs, wobei nicht markierte Bereiche als befahrbare Bereiche bestimmt werden. Es erfolgt also eine inverse Markierung des befahrbaren Bereichs, d.h. eine Markierung der nicht befahrbaren Bereiche, die automatisch in eine entsprechende Markierung der befahrbaren Bereiche umgesetzt wird. Abhängig von dem Umgebungsbereich kann das Markieren der nicht befahrbaren Bereiche einfacher sein und/oder schneller erfolgen, als das Markieren der befahrbaren Bereiche.

In vorteilhafter Ausgestaltung der Erfindung umfasst der Schritt des Bestimmens eines befahrbaren Bereichs in dem Umgebungsbereich ein Markieren von einer Mehrzahl Begrenzungspunkten, wobei der befahrbare Bereich als Polygon basierend auf der Mehrzahl Begrenzungspunkte bestimmt wird. Die Begrenzungspunkte können beispielsweise durch Antippen in einer Kartendarstellung des Umgebungsbereichs definiert werden. Ein Verbinden der Begrenzungspunkte erfolgt vorzugsweise automatisch durch das Fahrassistenzsystem. Das Polygon kann unmittelbar einen befahrbaren Bereich definieren, oder zunächst einen nicht befahrbaren Bereich, wobei sich der befahrbare Bereich durch den Bereich außerhalb des Polygons ergibt. Das Polygon kann mit geraden oder gebogenen Verbindungslinien gebildet werden. Auch können mehrere Polygone wie angegeben definiert werden, die gemeinsam den befahrbaren Bereich definieren.

In vorteilhafter Ausgestaltung der Erfindung weist das Fahrassistenzsystem wenigstens einen Umgebungssensor auf, der vorzugsweise als Ultraschallsensor, Lidar, insbesondere Laserscanner, oder Kamera, insbesondere Stereokamera, ausgeführt ist. Derartige Umgebungssensoren liefern verschiedenartige Umgebungsinformationen, die einzeln oder in Kombination verwendet werden können. Die von dem Umgebungssensor gewonnenen Umgebungsinformationen können entsprechend unterschiedlich sein.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragebar von einem Ausführungsbeispiel auf ein anderes.

Es zeigt
- Fig. 1: eine schematische Ansicht eines Fahrzeugs mit einem Fahrassistenzsystem gemäß einer ersten, bevorzugten Ausführungsform in einem Umgebungsbereich mit einer Trajektorie zwischen einem Startpunkt und einem Zielpunkt in einer Kartenansicht von oben,
- Fig. 2: eine schematische Ansicht des Fahrzeugs gemäß der ersten Ausführungsform in dem Umgebungsbereich mit der Trajektorie zwischen dem Startpunkt und dem Zielpunkt und einem initial befahrbaren Bereich basierend auf der Trajektorie sowie erkannten Hindernissen in einer Kartenansicht von oben,
- Fig. 3: eine schematische Ansicht des Fahrzeugs gemäß der ersten Ausführungsform in dem Umgebungsbereich mit der Trajektorie zwischen dem Startpunkt und dem Zielpunkt und einem befahrbaren Bereich umfassend den initial befahrbaren Bereich basierend auf der Trajektorie sowie erkannten Hindernissen in einer Kartenansicht von oben,
- Fig. 4: eine schematische Ansicht des Fahrzeugs gemäß der ersten Ausführungsform in dem Umgebungsbereich mit der Trajektorie zwischen dem Startpunkt und dem Zielpunkt und einem befahrbaren Bereich umfassend den initial befahrbaren Bereich basierend auf der Trajektorie sowie erkannten Hindernissen und verschiedenen Startpunkten des Fahrzeugs in einer Kartenansicht von oben,
- Fig. 5: eine schematische Ansicht des Fahrzeugs mit einem Fahrassistenzsystem gemäß der ersten, bevorzugten Ausführungsform der Erfindung in Draufsicht, und
- Fig. 6: ein Ablaufdiagram eines Verfahrens zum autonomen Parken des Fahrzeugs in Übereinstimmung mit dem Fahrzeug und dem Fahrassistenzsystem der ersten Ausführungsform.

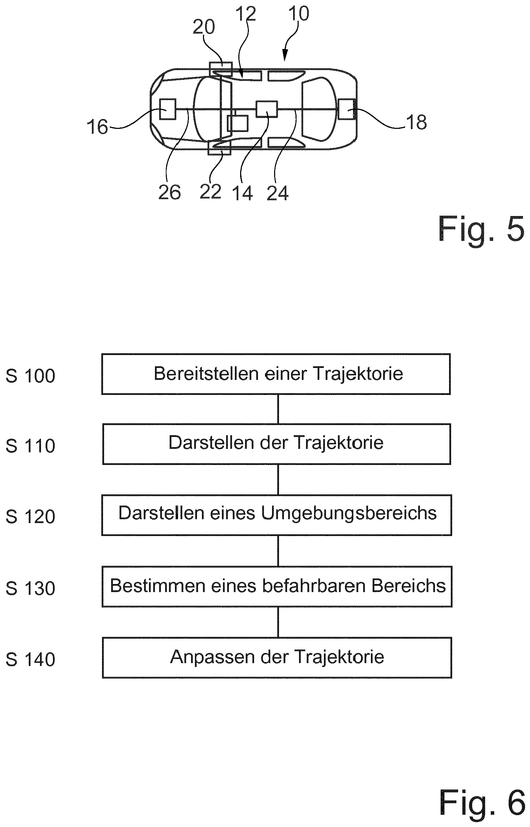

Figur 5 zeigt ein Fahrzeug 10 mit einem Fahrassistenzsystem 12 gemäß einer ersten, bevorzugten Ausführungsform.

Das Fahrassistenzsystem 12 umfasst eine Steuerungseinheit 14 zur Durchführung einer Steuerung zum autonomen Parken des Fahrzeugs 10. Außerdem umfasst das Fahrassistenzsystem 12 in diesem Ausführungsbeispiel eine Mehrzahl Kameras 16, 18, 20, 22, die als Umgebungssensoren 16, 18, 20, 22 über einen Datenbus 24 mit der Steuerungseinheit 14 verbunden sind. Die Umgebungssensoren 16, 18, 20, 22 sind im Detail als Frontkamera 16, Heckkamera 18, rechte Spiegelkamera 20 und linke Spiegelkamera 22 ausgeführt. Alternativ oder zusätzlich umfasst das Fahrzeug 10 weitere Umgebungssensoren 16, 18, 20, 22, die beispielsweise als Ultraschallsensor oder Lidar, insbesondere Laserscanner, ausgeführt sind.

Weiterhin umfasst das Fahrassistenzsystem 12 ein User Interface 26, das als grafisches User Interface 26 ausgeführt ist, um Informationen darzustellen und Eingaben zu empfangen. Entsprechend umfasst das grafisches User Interface 26 einen berührungsempfindlichen Bildschirm.

Das Fahrassistenzsystem 12 ist ausgeführt, das Fahrzeug 10 entlang einer Trajektorie 30 selbsttätig von einem Startpunkt 32, beispielsweise einem Hauseingang, bis hin zu einem entfernten Stellplatz oder einer Garage als Zielpunkt 34 zu bewegen, wie nachfolgend im Detail diskutiert wird.

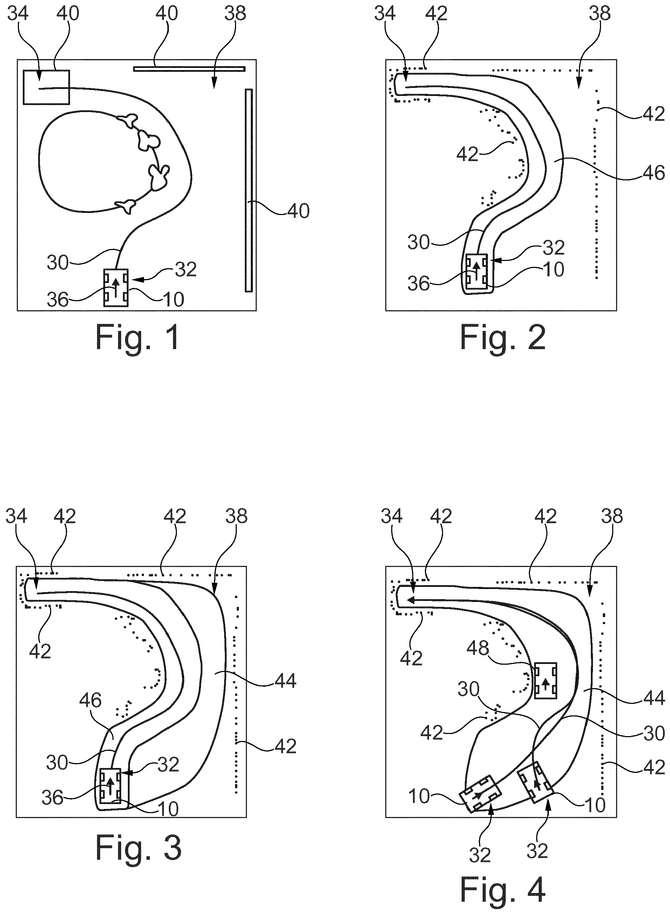

Fig. 6 zeigt ein Ablaufdiagramm zur Durchführung eines Verfahrens zum autonomen Parken des Fahrzeugs 10 basierend auf der Trajektorie 30. Das autonome Parken des Fahrzeugs 10 betrifft ein Einparken wie auch ein Ausparken des Fahrzeugs 10, wobei das Fahrzeug 10 durch das Fahrassistenzsystem 12 selbsttätig von seinem Standort, üblicherweise der Startpunkt 32, in eine Parklücke oder auf einen gewünschten Parkplatz, üblicherweise der Zielpunkt 34, bewegt wird. Entsprechendes gilt für ein Ausparken des Fahrzeugs 10, wobei eine umgekehrte Bewegung von der Parklücke oder dem Parkplatz beispielsweise auf eine Position zum Besteigen des Fahrzeugs oder zur Teilnahme am Verkehr erfolgt. Beide Bewegungen erfolgen basierend auf derselben Trajektorie 30, wobei Startpunkt 32 und Zielpunkt 34 vertauscht sind. Für das Einparken erfolgt die Bewegung des Fahrzeugs 10 entlang der Trajektorie 30 in Bewegungsrichtung 36. Das Verfahren wird unter zusätzlichem Bezug auf die Figuren 1 bis 4 beschrieben.

Das Verfahren beginnt hier mit Schritt S100. In Schritt S100 wird die Trajektorie 30 von dem Startpunkt 32 zu dem Zielpunkt 34 bereitgestellt. Der Startpunkt 32 ist ein Ausgangspunkt eines Einparkvorgangs; während der Zielpunkt 34 dem Parkplatz in einer Garage entspricht. Die Trajektorie 30 ist eine gelernte Trajektorie 30, wobei das Fahrzeug 10 eine einmal von dem Fahrer des Fahrzeugs 10 gefahrene Trajektorie 30 von dem Startpunkt 32 zu dem Zielpunkt 34 erfasst. Die Trajektorie 30 wird also in einem Lernmodus mit dem Fahrzeug 10 abgefahren. Dabei werden kontinuierlich Satellitenpositionsdaten aufgezeichnet, welche die Trajektorie 30 definieren. In einer alternativen Ausführungsform können die Positionsdaten auch relativ zu Lokalisierungsinformation von Laserscanner- oder Kamera-Lokalisierung sein.

Zusätzlich werden Fahrzeugbewegungen, die eine relative Bewegung des Fahrzeugs 10 ausgehend von dem Startpunkt 32 zu dem Zielpunkt 3 nachbilden, kontinuierlich aufgezeichnet. Die Fahrzeugbewegungen werden als Odometrieinformationen des Fahrzeugs 10 erfasst und aufgezeichnet.

In einem Schritt S110 wird die Trajektorie 30 in dem grafischen User Interface 26 dargestellt. Dies umfasst eine Kartendarstellung der Trajektorie 30. Eine entsprechende Darstellung ist in Fig. 1 zu sehen.

In einem Schritt S120 wird ein Umgebungsbereich 38 der Trajektorie 30 in dem grafischen User Interface 26 dargestellt. Der Umgebungsbereich 38 ist ein Bereich um das Fahrzeug 10 und die Trajektorie 30 herum. Gemäß Fig. 1 sind Hindernisse 40 im Umgebungsbereich 38 in entsprechender Weise nach der Art einer Kartenansicht dargestellt.

In dem grafischen User Interface 26 wird der Umgebungsbereich 38 mit der Trajektorie 30 zusammen mit Umgebungsinformationen 42 in dem Umgebungsbereich 28 dargestellt. Die Umgebungsinformationen 42 werden von den Umgebungssensoren 16, 18, 20, 22 erfasst. Die Umgebungsinformationen 42 umfassen Hindernisinformationen, die mit den Hindernissen 40 korrespondieren, wie in Fig. 2 erkennbar ist, insbesondere in Zusammenschau mit Fig. 1. Außerdem werden basierend auf von den Kameras 16, 18, 20, 22 und/oder den anderen Umgebungssensoren 16, 18, 20, 22 bereitgestellten Sensordaten, d.h. in diesem Ausführungsbeispiel Bildinformationen, automatisch ähnliche Bereiche in dem Umgebungsbereich 38 unterteilt und gemeinsam dargestellt.

Entsprechend wir der von den Umgebungssensoren 16, 18, 20, 22 erfasste Umgebungsbereich 38 in ähnliche Bereiche unterteilt. Es erfolgt eine Klassifizierung des Umgebungsbereichs 38 in ähnliche Bereiche.

In einem Schritt S130 wird ein befahrbarer Bereich 44 in dem Umgebungsbereich 38 bestimmt. Dazu wird zunächst ein durch die Trajektorie 30 definierter befahrbarer Bereich 46 bestimmt und in dem grafischen User Interface 26 dargestellt, wie unter Bezug auf Fig. 2 ersichtlich ist. Der durch die Trajektorie 30 definierte befahrbare Bereich 46 wird automatisch aus der Trajektorie 30 und fahrzeugspezifischen Daten, beispielsweise einer Fahrzeugbreite und/oder einer Fahrzeuglänge, bestimmt.

Davon ausgehend werden in dem grafischen User Interface 26 entsprechenden Eingaben getätigt, um in dem Umgebungsbereich 38 durch ein Erweitern des durch die Trajektorie definierten befahrbaren Bereichs 46 den befahrbaren Bereich 44 insgesamt zu definieren, wie in Fig. 3 dargestellt ist. Die Erweiterung des befahrbaren Bereichs 44 erfolgt vorzugsweise mit Hilfe von Sektoren, die über das User Interface 26 ausgewählt werden. In einer alternativen Ausführungsform erfolgt eine Erweiterung des befahrbaren Bereichs 44 durch Polygonanpassung, vorzugsweise über einen Touchscreen. Auf dem Touchscreen wird ein initiales Polygon durch einen initial befahrbaren Bereich vorgegeben, also ein durch die Trajektorie definierter befahrbarer Bereich 46, wobei das Polygon entsprechend erweitert werden kann.

Bei dem Verfahren reicht es prinzipiell aus, wenn der befahrbare Bereich 44 einmalig bestimmt wird. Im Anschluss kann auf diese Information wiederholt zugegriffen werden. Dabei kann der befahrbare Bereich 44 auch unmittelbar im Anschluss an das Bestimmen der Trajektorie 30 erfolgen.

In einem Schritt S140 erfolgt automatisches Anpassen der Trajektorie 30 von dem Startpunkt 32 zu dem Zielpunkt 34 unter Berücksichtigung des befahrbaren Bereichs 44. Dazu wird in dem Umgebungsbereich 38 eine alternative Trajektorie 30 bestimmt, wenn sich beispielsweise ein neues Hindernis 48 im Bereich der Trajektorie 30 befindet. In Fig. 4 ist ein geparktes Fahrzeug 48 als neues Hindernis 48 dargestellt. Unter Berücksichtigung des befahrbaren Bereichs 44 kann das neue Hindernis 48 einfach umfahren werden. Dies kann auch ausgehend von verschiedenen in Fig. 4 dargestellten Startpunkten 32 erfolgen, wodurch unterschiedliche Trajektorien 30 bestimmt werden können.

### Bezugszeichenliste

- 10: Fahrzeug
- 12: Fahrassistenzsystem
- 14: Steuerungseinheit
- 16: Frontkamera, Umgebungssensor
- 18: Heckkamera, Umgebungssensor
- 20: Spiegelkamera (rechts), Umgebungssensor
- 22: Spiegelkamera (links), Umgebungssensor
- 24: Datenbus
- 26: User Interface, grafisches User Interface
- 30: Trajektorie
- 32: Startpunkt
- 34: Zielpunkt
- 36: Bewegungsrichtung
- 38: Umgebungsbereich
- 40: Hindernis
- 42: Umgebungsinformation
- 44: befahrbarer Bereich
- 46: durch Trajektorie definierter befahrbarer Bereich
- 48: neues Hindernis, geparktes Fahrzeug

## Patentansprüche

1. Verfahren zum autonomen Parken eines Fahrzeugs (10) basierend auf einer Trajektorie (10), umfassend die Schritte
Bereitstellen der Trajektorie (30) von einem Startpunkt (32) zu einem Zielpunkt (34),
Darstellen der Trajektorie (30) in einem User Interface (26),
Darstellen eines Umgebungsbereichs (38) der Trajektorie (30) in dem User Interface (26), und
Bestimmen eines befahrbaren Bereichs (44) in dem Umgebungsbereich (38).

2. Verfahren nach Anspruch 1, **dadurch gekennzeichnet, dass**
das Verfahren einen zusätzlichen Schritt eines automatischen Anpassens der Trajektorie (30) von dem Startpunkt (32) zu dem Zielpunkt (34) unter Berücksichtigung des befahrbaren Bereichs (44) umfasst.

3. Verfahren nach einem der vorhergehenden Ansprüche 1 oder 2, **dadurch gekennzeichnet, dass**
der Schritt des Bereitstellens der Trajektorie (30) von einem Startpunkt (32) zu einem Zielpunkt (34) ein Lernen der Trajektorie (30) basierend auf wenigstens einer vorherigen Trajektorie (30) umfasst.

4. Verfahren nach einem der vorhergehenden Ansprüche, **dadurch gekennzeichnet, dass**
der Schritt des Darstellens der Trajektorie (30) in einem User Interface (26) eine grafische Darstellung in einem grafischen User Interface (26) umfasst.

5. Verfahren nach einem der vorhergehenden Ansprüche, **dadurch gekennzeichnet, dass**
der Schritt des Darstellens eines Umgebungsbereichs (38) der Trajektorie (30) in dem User Interface (26) ein Erfassen von Umgebungsinformationen (42) in dem Umgebungsbereich (38) mit wenigstens einem Umgebungssensor (16, 18, 20, 22) und ein Darstellen der von dem Umgebungssensor (16, 18, 20, 22) erfassten Umgebungsinformationen (42) in dem Umgebungsbereich (38) umfasst.

6. Verfahren nach einem der vorhergehenden Ansprüche, **dadurch gekennzeichnet, dass**
der Schritt des Darstellens eines Umgebungsbereichs (38) der Trajektorie (30) in dem User Interface (26) ein automatisches Unterteilen des von dem Umgebungssensor (16, 18, 20, 22) erfassten Umgebungsbereichs (38) in ähnliche Bereiche und ein gemeinsames Darstellen der ähnlichen Bereiche umfasst.

7. Verfahren nach Anspruch 6, **dadurch gekennzeichnet, dass**
der Schritt des automatischen Unterteilens des von dem Umgebungssensor (16, 18, 20, 22) erfassten Umgebungsbereichs (38) in ähnliche Bereiche eine Verwendung einer Kamera (16, 18, 20, 22) als Umgebungssensor und eine Klassifizierung des Umgebungsbereichs (38) in ähnlichen Bereiche basierend auf von der Kamera (16, 18, 20, 22) aufgenommenen Bilddaten umfasst.

8. Verfahren nach einem der vorhergehenden Ansprüche, **dadurch gekennzeichnet, dass**
der Schritt des Bestimmens eines befahrbaren Bereichs (44) in dem Umgebungsbereich (38) ein Bestimmen und Darstellen eines durch die Trajektorie (30) definierten befahrbaren Bereichs (46) umfasst.

9. Verfahren nach dem vorhergehenden Anspruch 8, **dadurch gekennzeichnet, dass** der Schritt des Bestimmens eines befahrbaren Bereichs (44) in dem Umgebungsbereich (38) ein Erweitern des durch die Trajektorie (30) definierten befahrbaren Bereichs (46) umfasst.

10. Verfahren nach einem der vorhergehenden Ansprüche, **dadurch gekennzeichnet, dass**
der Schritt des Bestimmens eines befahrbaren Bereichs (44) in dem Umgebungsbereich (38) ein Markieren wenigstens eines nicht befahrbaren Bereichs umfasst, wobei nicht markierte Bereiche als befahrbare Bereiche (44) bestimmt werden.

11. Verfahren nach einem der vorhergehenden Ansprüche, **dadurch gekennzeichnet, dass**
der Schritt des Bestimmens eines befahrbaren Bereichs (44) in dem Umgebungsbereich (38) ein Markieren von einer Mehrzahl Begrenzungspunkten umfasst, wobei der befahrbare Bereich (44) als Polygon basierend auf der Mehrzahl Begrenzungspunkte bestimmt wird.

12. Fahrassistenzsystem (12) zur Durchführung des Verfahrens nach einem der vorhergehenden Ansprüche.

13. Fahrassistenzsystem (12) nach Anspruch 12, **dadurch gekennzeichnet, dass** das Fahrassistenzsystem (12) wenigstens einen Umgebungssensor (16, 18, 20, 22) aufweist, der vorzugsweise als Ultraschallsensor, Lidar, insbesondere Laserscanner, oder Kamera (16, 18, 20, 22), insbesondere Stereokamera, ausgeführt ist.

14. Fahrzeug (10) mit einem Fahrassistenzsystem (12) nach einem der vorhergehenden Ansprüche 12 oder 13.
